# EUROPEAN PATENT APPLICATION

(11) **EP 3 702 479 A1**
(43) Date of publication of application: **02.09.2020**
(21) Application number: 19160176.4
(22) Date of filing: 01.03.2019
(51) Int. Cl.: C22B 3/28, C22B 3/32, C22B 3/38, C22B 3/22, C22B 7/00, C22B 59/00

(54) **METHOD OF DISSOLUTION AND SEPARATION OF CRITICAL RAW MATERIALS (CRM)**

(71) Applicant: MEAB Chemie Technik GmbH, 52068 Aachen (DE)
(72) Inventor: Dittrich, Carsten, 52074 Aachen (DE); Dittrich, Lina, 52066 Aachen (DE); Dunn, Grenvil Marquis, East Perth, Western Australia 6004 (AU)
(74) Representative: Gille Hrabal

(57) **Abstract**

The present invention relates to a method of dissolution and separation of critical raw materials (CRW), in particular to a method of dissolution of rare earth metals from rare earth metal-containing materials, characterized in that the process comprises the following steps:
a. providing an aqueous metal salt solution;
b. adding said rare earth metal-containing material to said aqueous rare earth metal-containing solution and providing a rare earths-metal solution and a metallic precipitate;
c. separating the metal-precipitate metal salt solution and forming a precipitate of said metal and a rare earth metal-containing solution.

## Description

The present invention relates to a method of dissolution and separation of critical raw materials (CRW), in particular to a method of dissolution of rare earth metals from rare earth metal-containing materials. Moreover, the present invention is directed to a process for the recovery (separation) of rare-earth or similar value metals from rare earth or value metal-containing materials.

A rare-earth element (REE) or rare-earth metal (REM), as defined by IUPAC, is one of a set of seventeen chemical elements in the periodic table, specifically the fifteen lanthanides, as well as scandium and yttrium. Scandium and yttrium are considered rare-earth elements because they tend to occur in the same ore deposits as the lanthanides and exhibit similar chemical properties. The lanthanide series of chemical elements comprises the 15 metallic chemical elements with atomic numbers 57 through 71, from lanthanum through lutetium.

Scandium is a chemical element with symbol Sc and atomic number 21. A silvery-white metallic d-block element, it has historically been classified as a rare-earth element, together with yttrium and the lanthanides.

Scandium is present in most of the deposits of rare-earth and uranium compounds, but it is extracted from these ores in only a few mines worldwide. Because of the low availability and the difficulties in the preparation of metallic scandium, which was first done in 1937, applications for scandium were not developed until the 1970s. The positive effects of scandium on aluminum alloys were discovered in the 1970s, and its use in such alloys remained its major application for many years.

Meanwhile, scandium-aluminum alloys show significant promise in many areas.

At first, applications of scandium in solid oxide fuel cells (SOFCs) become more and more interesting. These fuel cells can produce energy very cheaply and efficiently through continuous heat-producing internal reactions. SOFCs can be powered with cheap natural gas, and overall electricity from these cells costs only cents for each kilowatt hour.

Moreover, aluminum-scandium alloys are light and strong, and may be used in airplanes and in other applications with high-performance demands. Scandium-aluminum alloys can also be used in a type of 3D printing that creates CAD models entirely of metal.

One very interesting alloy, comprising scandium, is SCALMALLOY®, which is the world's first material specifically developed for the ALM process (= Laser Powder Bed Additive Layer Manufacturing). SCALMALLOY® is an aluminum-magnesium-scandium alloy with a unique microstructure, strength and ductility compared to other aluminum alloy powders. SCALMALLOY® is a material which works on all powder-bed SLM machines in operation since years.

Based on these two new application areas, the demand for scandium increases year by year and, for this reason, further ways of scandium procurement are requested. Based on the very rare resources of lanthanides, and in particular scandium, the recovery of these metals from deposits are in the economic focus.

One idea to recovery rare earth metals, including scandium and yttrium, from respective materials, comprising rare earth metals, including scandium and yttrium, is to dissolve the material in hydrochloric acid and to proceed with the recovery of the metals out of the resulting solution. However, the solution of rare earth metal-containing materials in hydrochloric acid is a very fast and exothermic reaction and, upon addition of hydrochloric acid, immediate hydrogen as gas is formed and the temperature of the resulting solution rises up. Such problems are, for example, also described for similar reactions, such as the reaction of NiMH battery waste leachate (Anttio Porvali et al., "Lanthanide-alkali double sulfate precipitation from strong sulfuric acid NiMH battery waste leachate", Waste Management 71 (2018), 381 to 389)).

Because temperatures around 90 °C are usually reached by dissolving rare earth metal-containing materials, some of the liquid introduced evaporates as water or gaseous HCl. As a result, a decrease on liquid volume is noted.

In addition, because of the rapid increase of the temperature due to the nature of this very violent exothermic reaction, some of the fine metallic powder of the rare earth metal-containing material agglomerated. However, when these agglomerated particles were reacted again with hydrochloric acid, no further reaction was observed.

Moreover, the dissolution of rare earth metal-containing materials in hydrochloric acid is, in particular, a problem in case the rare earth metal-containing materials have a specific content of carbon which might react with water and/or acids to form hydrogen and acetylene. Hydrogen and acetylene are explosive gases and undesired in apparatus for the recovery of rare earth metals or other value metals from rare earth or similar value metal-containing materials.

Thus, the present invention has the object of providing a different and new process for the dissolution of rare earth metals from rare earth metal-containing materials which can be carried out easily and avoids the above-discussed disadvantages.

The process should in particular allow a simple dissolution of rare earth metals from rare earth metal-containing materials which can be carried out safely and which can be used in the recovery of these rare earth metals.

Moreover, the process should in particular allow a simple dissolution of rare earth metals from rare earth metal-containing materials which avoids high exothermic conditions and can be controlled easily.

Furthermore, the process should in particular allow a simple dissolution of rare earth metals from rare earth metal-containing materials which avoids the agglomeration of the alloy particles under the applied conditions.

Finally, the process should in particular allow a simple dissolution of rare earth metals from rare earth metal-containing materials which avoids the formation of hydrogen or acetylene gas as an unwanted side-reaction.

The intended process should be in particular useful for the application in an overall process for the recovery of these rare earth metals out of the rare earth metal-containing materials.

These objects are solved with a process for the dissolution of critical raw materials (CRM), in particular of rare earth metals, from rare earth metal-containing materials. The claimed process is characterized in that the process comprises the following steps:
1. providing an aqueous metal salt solution;
2. adding a rare earth metal-containing material to said aqueous metal salt solution to produce an aqueous rare earth metal-containing solution and a metal precipitate;
3. separating said metal-precipitate from said rare earth metal-containing solution.

According to the present invention, the claimed process is based on the key finding that rare earth metals in elemental form can be easily be oxidized by metal salt solution and whereby the oxidation occurs under very controllable conditions and without the risk of any side-reactions or passivation processes of the used starting materials (rare earth metal-containing materials).

In a further claimed process, these dissolved rare earth metals can be readily converted to value products such as intermediate fluoride salts and oxides.

The claimed process uses hydrometallurgical routes such as, for example, dissolution, solvent extraction and selective precipitation. No novel building blocks are used in the claimed process; rather, it is a suite of intelligent and integrated unit operations that can be used for minimize energy, reagents, consumables, effluent water, solid residue, carbon dioxide, dangerous flammable or explosive gases, and organic waste.

The claimed method demonstrates a novel economic and environmentally friendly recycling process capable of efficiently dissolve, separate and recover several critical raw materials (CRMs), namely rare earth elements (lanthanides, yttrium and scandium), magnesium (Mg), cobalt (Co) and nickel (Ni) from end of life (EoL) products containing a challenging mixture of metals such as EoL hybrid and electric vehicles ((H)EV) and waste electrical, electronic equipment (WEEE) and specific alloys used in different technical fields.

The automotive sector is likely to become the main consumer of REE inside Europe and outside Europe, as it moves towards more Hybrid electric Vehicles and Full electric Vehicles. Furthermore, REE magnets are used in a diverse range of bulk applications inclusive aerospace (wing flaps and generators, and the medical sector MRI scanner), metal processing (magnetic separators) and renewable energy technologies (wing turbines) (see (1) Policy Brief Nr 1, EU FP7 MC-ITN EREAN Policy Brief, No. 1, May 2015, page 3; and (2) Recycling of NdFeB Magnets Using Sulfation, Selective Roasting, and Water Leaching, J. Sustain. Metall. (2015) 1:199-215).

The claimed process transformed (dissolved) a powdered sample using in particular Cu²⁺ solution (without sulfatisation and roasting) into a sulfate mixture with a dissolving efficiency of more than 95 % of the investigated REM (Pr, Nd, Dy). Fe follows the REM in forming iron(II) sulfate.

Within the present application, rare earth metals are cerium (Ce), dysprosium (Dy), erbium (Er), europium (Eu), gadolinium (Gd), holmium (Ho), lanthanum (La), lutetium (Lu), neodymium (Nd), praseodymium (Pr), promethium (Pm), samarium (Sm), scandium (Sc), terbium (Tb), thulium (Tm), ytterbium (Yb), and yttrium (Y).

Moreover, the present invention also relates to the dissolution and separation of the metals magnesium (Mg), cobalt (Co) und nickel (Ni). These three metals are also designated within the present application as rare earth metal (for the sake of simplicity).

Within the present application, the rare earth metal-containing materials might be either a natural or synthetic alloy, comprising at least one of the afore-mentioned rare earth metals, or any natural or synthetic waste material, comprising at least one of the afore-mentioned rare earth metals.

With the present invention, the expression "rare earth" used in singular does not mean that only one rare earth metal is used; rather the expression "rare earth" sued in singular stands for only one of the rare earth metals or to two or more rare earth metals. The same applies in case of the expression "rare earth" used in numerous compound words, such as "rare-earth metal-containing materials" or "rare earth metal-containing solutions". These materials and solutions may comprise one or more rare earth metal(s). Finally, in case the expression "rare earth metal-containing material" is used, this expression might relate to one "rare earth metal-containing material" or to two or more thereof.

Within the present invention, the aqueous metal salt solution used in the process step a. might be any aqueous salt solution of a metal which is more electropositive than the rare earth metal. Respective examples are copper and silver and other precious metals.

The claimed process adapts the so-called cementation process which is a type of precipitation, a heterogeneous process in which ions are reduced to zero valence at a solid metallic interface. The process is often used to refine leach solutions.

Usually, the cementation is used for the preparation of copper. Copper ions in solution, often from an ore leaching process, are precipitated out of solution in the presence of solid iron. The iron oxidizes, and the copper ions are reduced through the transfer of electrons. The reaction is spontaneous because copper is higher on the galvanic series than iron.

Cu²⁺(aq) + Fe(s) → Cu(s) + Fe²⁺(aq)

This was a historically useful process for the production of copper, where the precipitated solid copper metal was recovered as flakes or powder on the surface of scrap iron. This means that the cementation process as known from the prior art provides the target product as a solid.

The newly claimed process now differs in this aspect from the known processes of the art by dissolving the target product (rare earth metal). The claimed process, for this reason, needs to be specifically designed to recover the target product (rare earth metal) from the solution provided by the cementation process.

The claimed process is now described in detail with regard to the specific process steps a. to c. mentioned above.

### Step a. - providing an aqueous metal salt solution -

In step a. of the claimed process, an aqueous metal salt solution is provided.

As already mentioned above, the aqueous metal salt solution used in the process step a. might be any aqueous salt solution of a metal which is more electropositive than the rare earth metal. Respective examples are copper, silver and other electropositive metals.

In a first and preferred mode of the present invention, the aqueous metal salt solution is an aqueous copper salt solution. More preferred, the aqueous metal salt solution is an aqueous copper (II) salt solution.

However, in a first embodiment it is preferred that in said step a. of the claimed process said aqueous Cu²⁺ solution is an aqueous solution selected from the of group consisting of CuSO₄ (copper(II)-sulfate), CuCl₂ (copper(II)-chloride), Cu(NO₃)₂ (copper(II)-nitrate), and Cu(CH₃CO₂)₂ (copper(II)-acetate) or mixtures thereof.

Moreover, in a second embodiment it is preferred that in said step a. of the claimed process said aqueous Cu²⁺ solution is an aqueous solution selected from the of group consisting of CuSO₄ (copper(II)-sulfate), CuCl₂ (copper(II)-chloride) and mixtures thereof.

Furthermore, in a third embodiment it is preferred that in said step a. of the claimed process said aqueous Cu²⁺ solution is an aqueous solution selected from the of group consisting of CuSO₄ (copper(II)-sulfate) and CuCl₂(copper(II)-chloride).

Finally, in a fourth embodiment it is preferred that in said step a. of the claimed process said aqueous Cu²⁺ solution is an aqueous solution of CuSO₄ (copper(II)-sulfate).

In the present invention, the claimed process is in particular preferred by using an aqueous solution of CuSO₄ (copper(II)-sulfate) because in this embodiment the exothermic reaction course occurring during the addition of the rare earth-containing materials can easily be controlled and the temperature of the resulting mixture remains relatively low.

In the claimed process, the Cu²⁺ concentration of said aqueous Cu²⁺ solution is in general from 50 to 150 g/l, preferably from 80 to 140 g/l, more preferably from 100 to 120 g/l.

Additionally, the copper sulfate can be presented to the leach as a slurry of aqueous and crystalline material.

Optionally and preferably, the free acid in the aqueous material is low in concentration from less than 10 g/l, more preferably less than 5 g/l.

### Step b. - adding said rare earth metal-containing material to said aqueous metal salt solution and forming a rare earth metal-containing solution and a metallic precipitate -

After process step a., the claimed invention comprises the process step b. of adding said rare earth metal-containing materials to said aqueous metal salt solution and forming a rare earth metal-containing solution and a metallic precipitate.

However, prior to this process step b. (which means prior to adding the material, containing one or more of the rare earth metals, to said aqueous metal salt solution), the aqueous metal salt solution is heated to a temperature of in general 30 to 160 °C, preferably 35 to 95 °C.

After the aqueous metal salt solution is heated to the temperature mentioned above, the rare earth metal-containing material is added to said aqueous metal salt solution and the resulting rare earth metal-containing solution is stirred for at least in general 5 minutes, preferably at least 10 minutes, more preferably at least 15 minutes.

Optionally, the leach process can be conducted on a continuous basis.

The leach retention time of 6 hours may be required. Typically, the retention time could be as low as 2 ½ hours subject to the particle size of the metal containing material.

Furthermore, the resulting rare earth metal-containing solution is discharged from the leach and is stirred for a time period of at most in general 4.00 hours, preferably at most 3.00 hours, more preferably at most 2.50 hours.

Preferably the leach discharge slurry is cooled. Indirect cooling using water or direct contact employing air are just two of several options that can be employed to cool the leach discharge slurry.

Additionally, the particle size distribution of the material should have a distribution of 5 µm < P80 <1500 µm. More specifically, the particle size distribution of the material should have a distribution of 10 µm < P80 < 150 µm.

Furthermore, the resulting rare earth metal-containing solution is discharged from the leach and is stirred for a time period of in general 5 minutes to 4.00 hours, preferably 10 minutes to 3.00 hours, more preferably 15 minutes to 2.50 hours.

Usually, said rare earth metal-containing material is added to said aqueous metal salt solution together with a solid metal salt in step b. The expression "together with a solid metal salt" means that the rare earth metal-containing material is added simultaneously or shortly before or shortly after, in general in a time period of at most 15 minutes, preferably in a time period of at most 10 minutes, more preferably in a time period of at most 5 minutes, before or after the addition of the rare earth metal-containing material. By doing so, higher overall concentrations of the metal salt in the aqueous solution can be provided for the reaction with the rare earth metal because most of the useful aqueous metal salt solutions have a concentration maximum of the metal salt in the aqueous solution based on the solubility product of the metal salt.

Said solid metal salt, which is added together with the rare earth metal-containing material to the aqueous metal salt solution, is preferably the same metal salt used fin process step a. In case of a first mode of the present invention, in which copper is used in the aqueous metal salt solution, the copper(ii) salt is selected from the group consisting of CuSO₄ (copper(II)-sulfate), CuCl₂ (copper(II)-chloride), Cu(NO₃)₂ (copper(II)-nitrate), and Cu(CH₃CO₂)₂ (copper(II)-acetate) or mixtures thereof.

More preferably, said solid Cu²⁺ salt, which is added together with the rare earth metal-containing material to the aqueous metal solution, is selected from the of group consisting of CuSO₄ (copper(II)-sulfate), CuCl₂ (copper(II)-chloride) and mixtures thereof.

Once more preferred, said solid Cu²⁺ salt, which is added together with the rare earth metal-containing material to the aqueous metal solution, is selected from the of group consisting of CuSO₄ (copper(II)-sulfate) and CuCl₂(copper(II)-chloride).

Once more preferred, said solid Cu²⁺ salt, which is added together with the rare earth metal-containing material to the aqueous Cu²⁺ solution, is CuSO₄ (copper(II)-sulfate).

In order to homogenize the claimed process, it is further preferred that said copper(II)-salt, which is added together with said rare earth metal-containing material in step b. into the aqueous metal solution, is the same copper(II)-salt as provided in said preferred aqueous Cu²⁺ solution in step a.

Moreover, said rare earth metal-containing material is pulped into an aqueous system before mixing said alloy with said acid to provide said aqueous acid solution.

In said process step b., the resulting rare earth metal-containing solution, provided by adding the rare earth metal-containing material optionally together with a metal salt, in an aqueous solution to the metal salt solution may be cooled to room temperature or almost room temperature after adding said rare earth metal-containing material to said aqueous metal salt solution.

It might also be possible that after the rare earth metal-containing material is added, optionally together with a metal salt and an acid, in an aqueous solution to said metal salt solution, the resulting rare earth metal-containing solution needs to be clarified before the next step c. This clarification can be done by any suitable means such as, for example, filtration.

### Step c. - separating the metal-precipitate metal salt solution and forming a precipitate of said metal and a rare earth metal-containing solution -

After process step b., the claimed invention comprises the process step c. of separating the metal-precipitate metal salt solution and forming a precipitate of said metal and a rare earth metal-containing solution.

Usually, in said step c. the resulting residue from said rare earth metal-containing solution is filtered to separate the metal-containing precipitate and to provide a (further and clarified) rare earth metal-containing solution.

It is preferred when said metal-containing precipitate being separated in this process step c. is used for regeneration said aqueous metal salt solution in said step a. of the claimed process.

In case of a regeneration of said metal-containing precipitate, said metal-containing precipitate is dissolved by adding an acid prior together with an oxidant comprising at least one of air, oxygen, hydrogen peroxide etc. to said recirculation in said step a. Thereby, it is further preferred that said acid is the corresponding acid of said metal salt provided in step a.

The regenerated metal salt can be recycled as the lixiviant in step a.

Accordingly, said acid is preferably selected from sulfuric acid, hydrochloric acid, nitric acid, acetic acid, and mixtures thereof.

Moreover, said acid for the dissolution of the metal-containing precipitate is preferably selected from sulfuric acid, hydrochloric acid, and mixtures thereof.

Furthermore, said acid for the dissolution of the metal-containing precipitate is preferably selected from sulfuric acid and hydrochloric acid.

Finally, said acid is preferably sulfuric acid.

By the process step c., the claimed process provides a dissolved rare earth metals from rare earth metal-containing materials.

The process steps a. to c. can be used together with the following process step d. in an overall process for the recovery of rare earth metals from rare earth metal-containing materials. This process, which is a further subject-matter of the present invention, is characterized in that the process comprises steps a. to c. discussed above and a further step d.
d. of separating said rare earth metal from said rare earth metal-containing solution of step c.

This additional and optional process step is discussed in the following:

### Step d. - separating said rare earth metal from said rare earth metal-containing solution of step c. -

After the separation of the metal-containing precipitate is step c., the rare earth metal-containing solution is usually treated with an extractant solution in order to recover the rare earth metal in process step d.

Thus, in step d. said rare earth metal-containing solution is treated with an extractant solution.

This extractant solution preferably comprises an acidic extractant, selected from the group consisting of organo-phosphorus acids, carboxylic acids and sulphonic acids, or tributyl phosphate as neutral extractant.

In a further preferred embodiment of the present invention, said acidic extractant is an organic phosphoric acid, an organic phosphoric acid, an organic phosphinic acid, an organic monothiophosphinic acid and an organic dithiophosphinic acid.

Organo-phosphorus acids include the well-known phosphoric, phosphonic and phosphinic acids. Di(ethylhexyl)phosphoric acid (D2EHPA) and di(ethylhexyl)phosphonic acid (lonquest® 801), are the most investigated and most readily available organo-phosphorus acids. The organo-phosphorus acids are typical cat ion exchange reagents and involve most commonly the displacement of a hydrogen ion from the reagents by the extracted rare earth metal. The distribution coefficient in an organo-phosphorus rare earth metal system increases with an increase in the rare earth metal atomic number. The separation of co-extracted rare earth metal can be enhanced by the use of a scrubbing function. The exchange reaction is also pH dependent.

Further specific examples of extractants are di(2-ethylhexyl)phosphonic acid mono-2-ethylhexyl ester, bis(2,4,4-trimethylpentyl)phosphonic acid, bis(2,4,4-trimethylpentyl)-monothiophosphonic acid, and bis(2,4,4-trimethylpentyl)dithiophosphonic acid.

In addition to the organo-phosphorus acids, solvation reagents have been studied and used for rare earth metal separations. Tri butyl phosphate (TBP) is very effective under certain conditions as already mentioned above.

As already mentioned above, neutral phosphate based extractants are also another choice for certain cases. Tri-butyl phosphate (TBP) is one of the most popular reagents in this class. While TBP has a low Sc extraction in general, in aqueous solutions containing high concentration of HCI (6-8M), complete Sc extraction is achieved. Another candidate for rare earth metal removal from high acidity solutions (2M to 7M H₂SO₄) is Cyanex® 923, a specific tri-alkyl phosphine oxide. Usually, said extractant solution mentioned above is diluted in an organic solvent. As a suitable solvent for said extractant solution kerosene can be mentioned.

Moreover, the strip solution usually comprises ammonium fluoride.

During the process step d., the rare earth metals are transferred into said extractant solution.

The resulting extractant solution, comprising as the target products the rare earth metals, is usually subjected to an impurity scrubbing resulting in a scrubbed organic phase in order to remove metallic side-products. Metallic side-products might be, for example, aluminum and iron in case they are present in the starting material (rare earth metal-containing material). The exact by-products depend from the rare earth metal-containing material used as a starting material in the claimed process.

The scrubbing within process step d. is usually carried out by using a mineral acid, preferably a monovalent mineral acid and is carried out by washing the organic phase, containing the rare earth metals, with an aqueous solution of the mineral acid.

Thereafter, usually the scrubbed organic phase is washed with an aqueous phase for further clearance and purification.

After this optional washing procedure, the scrubbed organic phase being washed with an aqueous phase is typically subjected to a stripping process of said rare earth metals.

The procedure of stripping is usually carried out with an ammonium fluoride solution. Moreover, the stripping step is in general carried out with an ammonium fluoride solution at elevated temperatures, preferably between 20 and 40 °C, more preferably between 25 and 35 °C.

The concentration of NH₄F for stripping of the rare earth metals out of the organic phase is preferably 0.3 mol/l to 3 mol/l NH₄F.

Finally, the rare earth loaded strip liquor, containing the rare earth metals and ammonium fluoride, is treated with an antisolvent to precipitate the rare earth metal as ammonium rare earth fluorides.

The antisolvent to precipitate the rare earth metals as ammonium rare earth fluoride is usually an alcohol, preferably methanol. Alternatives are ketones and aldehydes.

The precipitated rare earth metal ammonium fluoride is usually filtered optionally washed, whereby the remaining antisolvent, such as the alcohol, is recirculated.

In order to provide the target product of the rare earth metal, the ammonium rare earth fluoride, such as (NH₄)₃ScF₆ in the case of scandium, is calcined, so as to obtain the rare earth metal oxide.

As mentioned in the introduction, said rare earth metal-containing material may lanthanide, aluminum, magnesium, zirconium, and manganese, whereby in a very preferred embodiment of the present invention said rare earth metal-containing material is the alloy SCALMALLOY®.

The rare earth metal-containing material, in particular the SCALMALLOY® starting material, has a particle size of 10 to 120 µm, preferably 15 to 100 µm.

The elemental composition of a SCALMALLOY® fine powder is presented in Table 1.

**Table 1. Elemental composition of SCALMALLOY® fine powder**

| **SCALMALLOY® fine powder concentration in g/kg** | | | |
|---|---|---|---|
| Al | 930 | Mn | 5 |
| Mg | 48 | Sc | 7 |
| | | Zr | 4 |

The present invention is outlined in more detail in the following example exaction.

### Reference example 1:

SCALMALLOY® according to the composition mentioned above in Table 1 is dissolved in hydrochloric acid according to the following chemical reactions:

Al + 3 HCl = 2 AlCl₃ + 3/2 H₂

Mg + 2 HCl = MgCl₂ + H₂

Mn + 2 HCl = MnCl₂ + H₂

Sc + 3 HCl = 2 ScCl₃ + 3/2 H₂

Zr + 4 HCl = ZrCl₄ + 2 H₂

The SCALMALLOY® fine metallic powder fraction was dissolved with technical grade HCI (31% w/w) with S/L ratio of approximately 1/10 and the initial temperature of the reaction was room temperature. The reaction below was observed as the main reaction since the major element of the SCALMALLOY® fine metallic powder fraction is Al.

Al (s) + 3 HCI (aq) = 3/2 H₂(g) + AlCl₃ (aq)

As the reaction initiated, a fast and exothermic reaction was observed. Upon addition of HCI, immediate H₂ gas formation and rapid increase of temperature was noted. Because temperatures around 90 °C were reached, some of the liquid introduced evaporated as H₂O and HCl. As a result, a decrease on liquid volume was noted.

In addition, because of the rapid increase of the temperature due to the nature of this violent exothermic reaction, some of the fine metallic powder agglomerated. However, when these agglomerated particles were reacted again with HCI, no reaction was observed which indicated that all particles introduced were reacted.

This comparative example shows the advantage of the use of sulfuric acid as compared with hydrochloric acid; the same reaction with sulfuric acid under similar conditions resulted in a smoother temperature profile and a less hard reaction condition.

### Example 2 (according to the present invention):

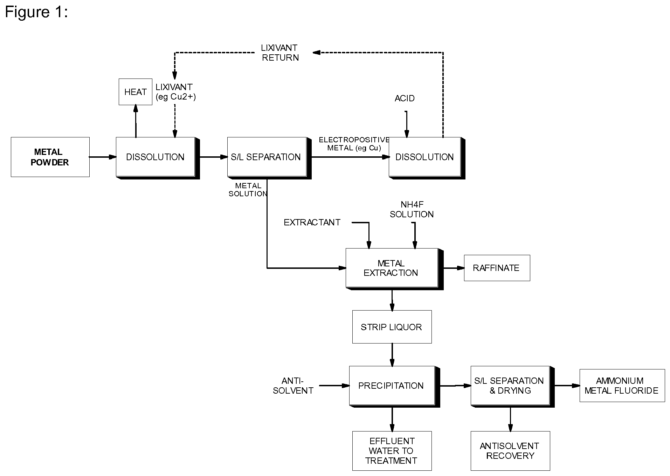

The reaction is carried out as outlined in the flow chart of Figure 1.

Testwork has been concluded using concentrated copper sulfate solution, by dissolving 470 g/l CuSO₄ * 5 H₂O/l) to dissolve the SCALMALLOY® fine metallic powder according the following chemical reactions:

3 CuSO₄ + 2 Al = Al₂(SO₄)₃ + 3 Cu

CuSO₄ + Mg= MgSO₄ + Cu

CuSO₄ + Mn = MnSO₄ + Cu

3 CuSO₄ + 2 Sc = Sc₂(SO₄)₃ + 3 Cu

2 CuSO₄ + Zr = Zr(SO₄)₂ +2 Cu

A SCALMALLOY® first leach solution was prepared by dissolving the alloy in hydrochloric acid. The elemental Composition of the pregnant solution after dissolving SCALMALLOY® fine powder is shown in table 2 below:

**Table 2. Elemental Composition of the pregnant solution after dissolving SCALMALLOY® fine powder**

| **Composition in g/l** | |
|---|---|
| Al | 64 |
| Sc | 0,5 |
| Mg | 4,0 |
| Zr | 0,4 |
| Mn | 0,3 |

The scandium solvent extraction (SX) circuit includes extraction, impurity scrubbing, washing and stripping. The organic phase consists of an extractant, a modifier diluted in aliphatic kerosene. The production of an ammonium scandium fluoride containing strip liquor by solvent extraction is basically carried out by means of multi stage mixer settler units which are split into the following functions:
- Sc extraction where washed solvent is loaded with the scandium ion from the prepared pregnant solution.
- Impurity scrubbing where co-extracted impurities, mainly aluminium and iron are scrubbed from the loaded organic with a mineral acid.
- Organic solvent washing where the scrubbed organic solution is washed with water.
- Sc stripping where the scandium is stripped from the loaded organic with an ammonium fluoride solution at elevated temperature.
- Organic solvent washing where the stripped organic is washed with water.

The loaded strip liquor from the Sc SX circuit contains elevated levels of scandium in a fluoride matrix. The loaded strip liquor is received continuously from the SX circuit into surge tank. The scandium is precipitated from the loaded strip as a pure ammonium scandium hexa fluoride product employing methanol. The scandium salt is filtered of, washed and dried as the intermediate scandium product.

The barren liquor from the process is accumulated and stored. Methanol is removed from the barren liquor by evaporation under low pressure. The resulting methanol is re-used in the Sc precipitation circuit. The concentrate containing the strip solution of ammonium fluoride is sent to the make-up section.

The example according to the present invention shows that the claimed process can be carried out with only minor amounts of wastes produced as shown below:
The operations would produce effluent water, solid residue and organic waste. The effluent water and organic waste will need to be treated in an effluent plant together with waste produced from other process operations. The water is then re-used into the leach circuit. Methanol and ammonium fluoride is re-used into the Sc SX circuit.

In example 1, 0,27 mol Cu (17,2 g Cu) for 5,5 g SCALMALLOY® are used.

The following tables show that the process according to the present invention can be carried out at different temperatures.

**Table 3. Dissolution of SCALMALLOY® powder using 300 ml CuSO₄ (317 g/l CuSO₄ * 5 H₂O) + 37 g CuSO₄ * 5 H₂O + 9,5 g SCALMALLOY® at T = 50 °C)**

| **Sample ID** | **Time min** | **Temp. °C** | **Sc mg/l** | **Zr mg/l** | **Al mg/l** | **Mn mg/l** | **Mg mg/l** | **Cu mg/l** |
|---|---|---|---|---|---|---|---|---|
| | 0 | 40 | | | | | | 112000 |
| 45107 | 0 | 48 | 28,5 | | 3720 | 5,6 | 56,9 | 86400 |
| 45108 | 15 | 50 | 183 | | 25800 | 25,8 | 64,8 | 24500 |
| 45109 | 60 | 52 | 194 | 101 | 27300 | 25,4 | 62,6 | 20800 |
| 45110 | 120 | 52 | 204 | | 29400 | | | 14000 |

**Table 4. Dissolution of SCALMALLOY® powder using 300 ml CuSO₄ (317 g/l CuSO₄ * 5 H₂O) + 37 g CuSO₄ * 5 H₂O + 9,5 g SCALMALLOY® at T = 66 - 70 °C)**

| **Sample ID** | **Time min** | **Temp. °C** | **Sc mg/l** | **Zr mg/l** | **Al mg/l** | **Mn mg/l** | **Mg mg/l** | **Cu mg/l** |
|---|---|---|---|---|---|---|---|---|
| | 0 | 40 | | | | | | 112000 |
| 45111 | 10 | 68 | 183 | | 25100 | 28,9 | 65,3 | 20100 |
| 45112 | 30 | 64 | 207 | | 28300 | 28,7 | 71,5 | 15900 |
| 45113 | 60 | 64 | 209 | 107 | 29300 | 30,2 | 71,1 | 14400 |
| 45114 | 120 | 64 | 213 | | 31300 | | | 7100 |

**Table 5. Dissolution of SCALMALLOY® powder using 300 ml CuSO₄ (317 g/l CuSO₄ * 5 H₂O) + 37 g CuSO₄ * 5 H₂O + 9,5 g SCALMALLOY® at T = 95 °C)**

| **Sample ID** | **Time min** | **Temp. °C** | **Sc mg/l** | **Zr mg/l** | **Al mg/l** | **Mn mg/l** | **Mg mg/l** | **Cu mg/l** |
|---|---|---|---|---|---|---|---|---|
| | 0 | 75 | | | | | | 112000 |
| 45115 | 10 | 95 | 211 | | 29700 | | | 12900 |
| 45116 | 60 | 90 | 225 | 116 | 30800 | | | 8900 |

The resulting metal residues were analyzed (XRF analysis) and the results are presenting below (Table 7 to Table 10):

**Table 6. Dissolution of SCALMALLOY® powder using 300 ml CuSO₄ (317 g/l CuSO₄ * 5 H₂O) + 37 g CuSO₄ * 5 H₂O + 9,5 g SCALMALLOY® at T=50 °C)**

| **Composition of Metal Residue / %** | | | | | | | |
|---|---|---|---|---|---|---|---|
| **Time** | **Temp** | **% Sc** | **% Zr** | **% Al** | **% Mn** | **% Mg** | **% Cu** |
| *15* | *50* | <0,01 | 0,02 | 6,78 | <0,01 | 0,27 | 91 |
| *60* | *52* | <0,01 | <0,01 | 3,67 | <0,01 | 0,14 | 95 |
| *120* | *52* | <0,01 | <0,01 | 0,15 | <0,01 | 0,01 | <99 |

**Table 7. Dissolution of SCALMALLOY® powder using 300 ml CuSO₄ (317 g/l CuSO₄ * 5 H₂O) + 37 g CuSO₄ * 5 H₂O + 9,5 g SCALMALLOY® at T = 66 - 70 °C)**

| **Composition of Metal Residue / %** | | | | | | | |
|---|---|---|---|---|---|---|---|
| **Time** | **Temp** | **% Sc** | **% Zr** | **% Al** | **% Mn** | **% Mg** | **% Cu** |
| *10* | *68* | <0,01 | <0,01 | 5,07 | <0,01 | 0,21 | 93 |
| *60* | *64* | <0,01 | <0,01 | 1,66 | <0,01 | 0,09 | 97 |
| *120* | *64* | <0,01 | <0,01 | 0,18 | <0,01 | 0,09 | >99 |

**Table 8. Dissolution of SCALMALLOY® powder using 300 mL CuSO₄ (317 g/l CuSO₄ * 5 H₂O) + 37 g CuSO₄ * 5 H₂O + 9,5 g SCALMALLOY® at T = 95 °C)**

| **Composition of Metal Residue / %** | | | | | | | |
|---|---|---|---|---|---|---|---|
| **Time** | **Temp** | **% Sc** | **% Zr** | **% Al** | **% Mn** | **% Mg** | **% Cu** |
| *60* | *95* | <0,01 | <0,01 | 0,5 | <0,01 | 0,04 | 99 |

**Table 9. Dissolution of SCALMALLOY® powder using 140 mL PLS containing about 8 g/l Cu+1,0 g Scalmalloy at T = 95 °C)**

| **Composition of Metal Residue / %** | | | | | | | |
|---|---|---|---|---|---|---|---|
| **Time** | **Temp** | **% Sc** | **% Zr** | **% Al** | **% Mn** | **% Mg** | **% Cu** |
| *60* | *95* | 0,14 | 0,08 | 49,5 | 0,12 | 1,77 | 44,5 |

### Example 3 (according to the present invention):

Testwork has been concluded using concentrated copper sulfate solution, by dissolving 470 g/l CuSO₄*5H₂O/l) to dissolve the NdFeB metallic powder according the following chemical reactions:

3 CuSO₄ + 2 Pr = Pr₂(SO₄)₃ + 3 Cu

3 CuSO₄ + 2 Nd= Nd₂(SO₄)₃ + 3 Cu

3 CuSO₄ + 2 Dy = Dy₂(SO₄)₃ + 3 Cu

CuSO₄ + Co = CoSO₄ + Cu

CuSO₄ + Fe = FeSO₄ + Cu

In example, 3, 0,27 mol (17,2 g Cu) for 24 g NdFeB magnet powder is used.

The elemental composition of a NdFeB powder is presented in following Table 10.

| ***Table10: Elemental composition of* NdFeB *powder*** | | | |
|---|---|---|---|
| **NdFeB powder concentration in g/kg** | | | |
| Nd | 154 | Al | 2.6 |
| Pr | 31 | B | 8.1 |
| Dy | 800 | Co | 61 |
| | | Ni | 0.4 |
| | | Fe | 528 |
| | | C | 11 |

The results of the claimed process are described below in the following table 11.

**Table 11: Dissolution of NdFeB powder using 100 ml CuSO4 (317 g/l)+11 g NdFeB at T=90 °C)**

| **Sample ID** | **Time min** | **Temp. °C** | **Nd mg/l** | **Dy mg/l** | **Pr mg/l** | **Co mg/l** | **Ni mg/l** | **Fe mg/l** |
|---|---|---|---|---|---|---|---|---|
| | 0 | 40 | 0 | 0 | 0 | 0 | 0 | 0 |
| 45138 | 15 | 89 | 6525 | 2995 | 1746 | 3955 | 7,9 | 31560 |
| 45139 | 30 | 90 | 11600 | 4792 | 2328 | 6328 | 12,7 | 48560 |
| 45140 | 60 | 89 | 14500 | 5990 | 2910 | 7910 | 16 | 60700 |

## Claims

1. A process for dissolving of rare earth metals from rare earth metal-containing materials, **characterized in that** the process comprises the following steps:
a. providing an aqueous metal salt solution;
b. adding a rare earth metal-containing material to said aqueous metal salt solution to produce an aqueous rare earth metal-containing solution and a metal precipitate;
c. separating said metal-precipitate from said rare earth metal-containing solution.

2. The process according to claim 1, **characterized in that** in said step a. said aqueous metal solution is an aqueous Cu²⁺ solution selected from the of group consisting of CuSO₄ (copper(II)-sulfate), CuCl₂ (copper(II)-chloride), Cu(NO₃)₂ (copper(II)-nitrate), and Cu(CH₃CO₂)₂ (copper(II)-acetate) or mixtures thereof.

3. The process according to claim 1 or 2, **characterized in that** the aqueous metal salt solution is heated to a temperature of 30 to 160 °C, preferably 35 to 95 °C, prior to adding said rare earth metal-containing material to said aqueous metal salt solution in step b.

4. The process according to anyone of claims 1 to 3, **characterized in that** in said step b. said rare earth metal-containing material is added to said aqueous metal salt solution and the resulting mixture is stirred after addition for 5 minutes to 4.00 hours, preferably 10 minutes to 3.00 hours, more preferably 15 minutes to 2.50 hours.

5. The process according to anyone of claims 1 to 4, **characterized in that** said rare earth metal-containing is cooled during stirring.

6. The process according to anyone of claims 1 to 5, **characterized in that** said rare earth metal-containing material is added to said aqueous metal salt solution together with a solid metal salt in step b.

7. The process according to claim 6, **characterized in that** said metal salt added together with said rare earth metal-containing material in step b. is the same metal salt as provided in said aqueous metal solution in step a.

8. The process according to anyone of claims 1 to 7, **characterized in that** in said step c. the resulting residue from said rare earth metal-containing solution is filtered to separate the metal-containing precipitate.

9. A process for the recovery of rare earth metals from rare earth metal-containing materials, comprising the steps a. to c. according to anyone of claims 1 to 8 and further comprising step d.
d. separating said rare earth metal from said rare earth metal-containing solution of step c.

10. The process according to claim 9, **characterized in that** in step d. said rare earth metal-containing solution of step c. is treated with an extractant solution.

11. The process according to claim 9 or 10, **characterized in that** in step d. said rare earth metal-containing solution of step c. is treated with an extractant solution comprising an acidic extractant, selected from the group consisting of organo-phosphorus acids, carboxylic acids and sulphonic acids, or tri-butyl phosphate as neutral extractant.

12. The process according to anyone of claims 9 to 11, **characterized in that** in step d. said rare earth metal-containing solution of step c. is treated with an extractant solution comprising ammonium fluoride.

13. The process according to claim 12, **characterized in that** said extractant solution is subjected to an impurity scrubbing resulting in a scrubbed organic phase and, thereafter, the scrubbed organic phase is washed with an aqueous phase and stripped to recover said rare earth metals.

14. The process according to anyone of claims 1 to 13, **characterized in that** said rare earth metal-containing material is SCALMALLOY®.

15. The process according to any one of claims 1 to 14, **characterized in that** said rare earth metal-containing material has a particle size (P80) of 10 to 1500 µm, preferably 15 to 100 µm.
